# EUROPÄISCHE PATENTSCHRIFT

(11) **EP 0 571 782 B1**
(45) Veröffentlichungstag und Bekanntmachung des Hinweises auf die Patenterteilung: **05.03.1997**
(21) Anmeldenummer: 93107115.3
(22) Anmeldetag: 03.05.1993
(51) Int. Cl.: F23R 3/28

(54) **Verfahren zum Betrieb einer Brennkammer einer Gasturbine**
Gasturbine combustor and operating method
Procédé de fonctionnement d'une chambre de combustion pour turbine à gaz

(30) Priorität: 27.05.1992 CH 1715/92
(43) Veröffentlichungstag der Anmeldung: 01.12.1993
(73) Patentinhaber: ASEA BROWN BOVERI AG, 5401 Baden (CH)
(72) Erfinder: Müller, Gerhard, CH-5430 Wettingen (CH)
(74) Vertreter: Klein, Ernest

(56) Entgegenhaltungen:
- EP-A- 0 030 313
- EP-A- 0 095 788
- EP-A- 0 387 532

## Beschreibung

### Technisches Gebiet

Die vorliegende Erfindung betrifft ein Verfahren zum Betrieb einer Brennkammer gemäss Oberbegriff des Anspruchs 1. Sie betrifft auch die Ausbildung eines Brenners zum Betrieb einer solchen Brennkammer.

### Stand der Technik

Es sind sogenannte Silobrennkammer bekannt geworden, welche mit Brennern ausgerüstet sind, die nach dem "Lean-Premix-Prinzip" (magere Vormischung) arbeiten. Diese sogenannte "Dry-Low-NOx"-Brenner werden nach einer schaltenden Fahrweise betrieben, wobei die Anzahl Brenner in wenige relativ grosse Brenner-Gruppen aufgeteilt sind. An sich können dieser Brenner sowohl in Silobrennkammern als auch in Ringbrennkammern eingebaut und dort betrieben werden. Am Beispiel einer Ringbrennkammer wird anströmungsseitig und in Umfangsrichtung eine Reihe von Vormischbrennern verschiedener Grösse angeordnet. Die grossen Vormischbrenner, welche die Hauptbrenner der Brennkammer sind, und die kleinen Vormischbrenner, welche die Pilotbrenner der Brennkammer sind, münden in eine Frontwand der Brennkammer, wobei diese Vormischbrenner abwechslungsweise und in einem einheitlichen Abstand zueinander angeordnet sind. Bei den Silobrennkammer ist es so, dass die vorgesehenen Vormischbrenner wabenförmig kopfseitig der Brennkammer angeordnet sind, wobei sie in Gruppen aufgeteilt sind, die aus meistens einem pilotierenden und aus einer Anzahl pilotierte Brennern besteht.
Die Brenner werden dabei einzeln oder in Gruppen über die Last in Betrieb genommen. Dazu ist ein Gasverteilungssystem installiert, welches es erlaubt, einzelne Brennergruppen zu- oder abzuschalten, dies im Sinne eines schaltenden Betriebes. Dabei hat der schaltende Betrieb den Nachteil, dass die Brennerluftzahlen und damit die NOx-Emissionen stark variieren. Allgemein, analog zu der bekannten "Dry-Low-NOx"-Technik, handelt es sich vorliegend um relativ grosse Gruppen von Brennern. Dies hängt damit zusammen, dass eine auf wenige Gruppen beschränkte Fahrkonzeption Vorteile bezüglich Hard- und Software-Aufwand bietet. Es lassen sich dabei verschiedene Fahrweisen zugrundelegen, so eine solche, welche durch eine Ventilstellung über die Last, oder eine Brennstoffaufteilung über die Last, oder eine Brennstoffzuordnung zum Lastverhältnis für jeden Brenner charakterisiert sind. Diese Vorgehensweise führt dazu, dass die Brenner-Luftzahlen, die für die NOx-Emissionen entscheidend sind, hohen Schwankungen unterliegen und somit auch die NOx-Emissionen stark schwanken. Um diese Brennerluftschwankungen über die Last zu reduzieren wäre es denkbar, die Anzahl der Gruppen zu vergrössern. Im Idealfall führte dies zu einer Einzelansteuerung jedes Brenners. Indessen, Gasturbinen mit grossen Leistungen bedingen leistungsstarke Brennkammern, mit einer entsprechend grossen Anzahl Brenner, was wiederum den Einbau einer grossen Anzahl von Ventilen und von Versorgungsleitungen für die Brenner nötig macht. Die Sprünge beim Schalten der Brenner wäre an sich minimal, indessen müsste bei einer solchen Konstellation einen grossen Hardware- und Software-Aufwand betrieben werden. Kommt bei einer solchen Fahrweise hinzu, dass die schwankenden Umgebungsbedingungen schwer in den Griff zu bekommen sind, so dass schlussendlich trotzdem mit Schwankungen gerechnet werden müsste, die das angestrebte Ziel, die NOx-Emissionen über den ganzen Betrieb, und insbesondere bei Vollast, konstant niedrig zu halten, zuwiderläufen.
Zusammenfassend lässt sich sagen, dass folgende Effekte verhindern, dass die NOx-Emissionen bei variablen Umgebungsbedingungen konstant gehalten werden können:
- Mit der Umgebungstemperatur (Druck) steigt oder fällt der Anteil der angesaugten Luftmenge, die zur Kühlung der Turbine benutzt wird, entsprechend fällt oder steigt die Brennkammerluftmenge. Dies führt, trotz konstanter Temperatur zu variablen Flammentemperaturen und damit zu einer veränderlichen NOx-Produktion.
- Die Aenderung des Brennkammerdruckes aufgrund der Umgebungsbedingungen führt direkt zu einer Veränderung der NOx-Bildung in der Brennkammer.

### Darstellung der Erfindung

Aus EP-A-0 030 313 ist eine Brennkammer für Gasturbinen bekanntgeworden, bei welcher die Verbrennungs- und Mischluft im Gegenstrom zu den heissen Verbrennungsgasen über einen zwischen einem Brennkammergehäuse und einem Flammrohr gebildeten Ringraum einem in das Flammrohr einmündenden Vormischbrenner bzw. Mischluftöffnungen des Flammrohres zuströmt. Aus betrieblichen Gründen ist vorgesehen, dass in das Flammrohr eine Anzahl von Vormischbrennern einmünden, und dass jeder Vormischbrenner eine lastabhängig zu- und abschaltbare Brennstoffzuführung besitzt. Diese geschieht unter gleichzeitiger Regelung der Gesamtmenge des den zugeschalteten Vormischbrennern zugeführten Brennstoffes. Stellen sich während des Betriebes der Gasturbine Veränderungen der Umgebungsbedingungen, wie Umgebungstemperatur und Umgebungsdruck, ein, so vermag diese Regelung die dafür erforderlichen Korrekturen nicht zu erbringen.

Aus EP-A-0 387 532 ist eine weitere Brennkammer einer Gasturbine bekanntgeworden. Bei dieser Brennkammer sind anströmungsseitig in Umfangsrichtung eine Reihe von drallerzeugenden Vormischbrennern angeordnet, welche in grossen und kleinen Vormischbrenner unterteilt sind, wobei die grossen die Hauptbrenner und die kleinen die Pilotbrenner der Brennkammer bilden. Die grossen und die kleinen Vormischbrenner sind abwechslungsweise in einem Abstand zueinander plaziert, wobei sie gleichzeitig in eine einzige Frontwand der Brennkammer münden. Durch den Drall der einzelnen Vormischbrenner in der Ebene der Frontwand ergibt sich aufgrund der Nähe der einzelnen Wirbelzentren zueinander eine zündungsmässige Interdependenz. Die Zündung und Verbrennung der einzelnen Vormischbrenner ist allein durch die lastabhängige Brennstoffzuführung gegeben, wobei beim Hochfahren der Gasturbine die Brennstoffmenge zunächst nur über die Pilotbrenner zugeführt wird, und erst ab einem bestimmten Lastpunkt erfolgt die Brennstoffzuführung über die Hauptbrenner.

Hier will die Erfindung Abhilfe schaffen. Der Erfindung, wie sie in den Ansprüchen gekennzeichnet ist, liegt die Aufgabe zugrunde, bei einer Brennkammer der eingangs genannten Art Korrekturen des Fahrprogramms vorzusehen, welche die NOx-Emissionen, insbesondere bei Vollast, aufgrund von schwankenden Umgebungsbedingungen, generell nicht über den zugrundegelegten Wert anschwellen zu lassen.

Insbesondere bei einer Silobrennkammer, in welcher mehrere gleiche Vormischbrenner, in Gruppen unterteilt, angeordnet sind, werden besonders im Bereich der Vollast sehr hohe Ansprüche an die Qualität der Verbrennung gestellt, um die scharfen NOx-Emissionensvorschriften einzuhalten. Dabei wird das Prinzip eines pilotierten Betriebes einzelner Brenner zugrundegelegt. Der wesentliche Vorteil der Erfindung ist nun darin zu sehen, dass zu diesem Zweck eine Gruppe von Brennern, die letztzugeschaltete Gruppe, in Abhängigkeit vorzugsweise der Umgebungstemperatur mit Brennstoff versorgt wird. Diese Brenner werden grundsätzlich magerer als alle anderen Brenner betrieben, weshalb sie an der Produktion des thermischen NOx-Ausstosses nur unwesentlich beteiligt sind. Fällt die Aussentemperatur, so wird das Ventil dieser letzten Gruppe weiter geöffnet, was zu einer Umverteilung des Brennstoffes von den NOx-relevanten Pilotbrennern auf die letzte Gruppe führt. Wenn die Aussentemperatur steigt, erfolgt die umgekehrte Prozedur. Die NOx-Bildung kann damit konstant gehalten werden, wobei gleich anzumerken ist, dass in der Brennkammer Zonen konstanter, stabiler Verbrennung mit gleichmässiger NOx-Produktion existieren, und kleine Gebiete, in denen die Umgebungstemperatureffekte kompensiert werden, die jedoch kaum zum thermischen NOx-Ausstoss beitragen.

Ein weiterer wesentlicher Vorteil der Erfindung ist darin zu sehen, dass neben konstanten NOx-Emissionen bei Vollast auch auf konstantem Abstand zur Löschgrenze bei Vollast geregelt werden kann. Dies würde zu jeweils minimal möglichen NOx-Emissionen führen.

Ferner ist ein weiterer wesentlicher Vorteil der Erfindung darin zu sehen, dass auch bei Teillast die jeweils letztzugeschaltete Brennergruppe nach den Umgebungsbedingungen geregelt wird, wobei hier komplementär eine Regelung über die Last erfolgt.

Vorteilhafte und zweckmässige Weiterbildungen der erfindungsgemässen Aufgabenlösung sind in den weiteren Ansprüchen gekennzeichnet.

Im folgenden wird anhand der Zeichnungen ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben. Gleiche Elemente sind in den verschiedenen Figuren mit den gleichen Bezugszeichen versehen.

### Kurze Beschreibung der Zeichnungen

Es zeigt:
- Fig. 1: eine Silobrennkammer mit Vormischbrennern,
- Fig. 2: ein Schema eines pilotierten Betriebes, Ventilstellung zu Last,
- Fig. 3: ein Schema eines pilotierten Betriebes, Brennstoffmenge zu Last,
- Fig. 4: ein Schema eines pilotierten Betriebes, Brennstoff/ Luft zu Last,
- Fig. 5: ein Schema über eine Korrektur des Ventilhubes der der pilotierten letzte Gruppe, in Abhängigkeit der Umgebungstemperatur bei Vollast,
- Fig. 6: eine Hysterese der Brennergruppenregelung im pilotierten Betrieb bei Auf- und Abfahren der Anlage,
- Fig. 7: einen Vormischbrenner und
- Fig. 8-10: entsprechende Schnitte durch verschiedene Ebenen des Brenners gemäss Fig. 7, in schematischer Darstellung.

### Wege zur Ausführung der Erfindung, gewerbliche Verwertbarkeit

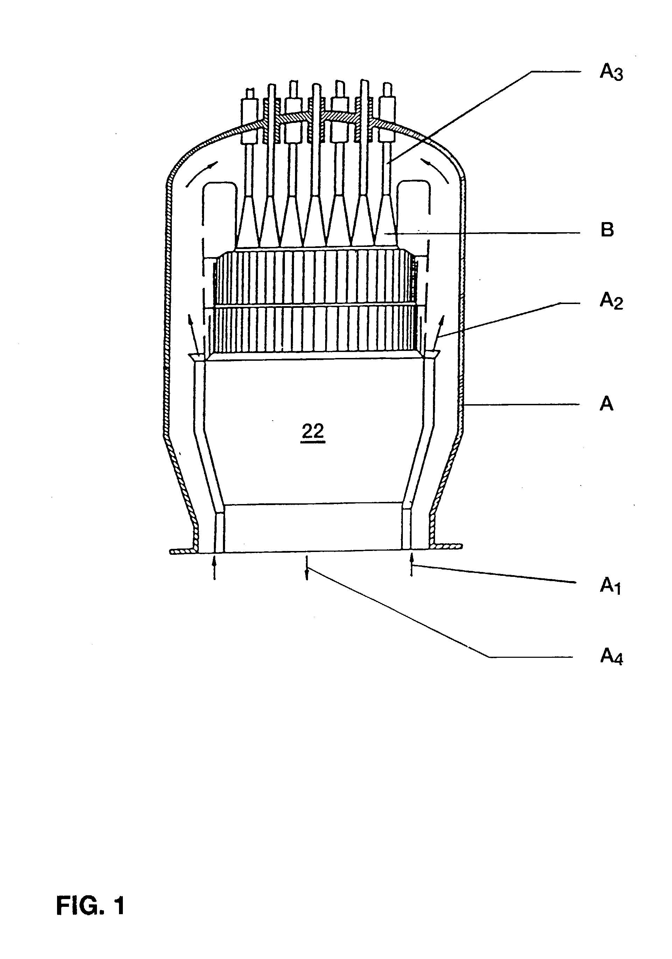

Fig. 1 zeigt zeigt eine typische Silobrennkammer A, welche mit einer Anzahl Vormischbrenner B bestückt ist. Als Ergänzung für ein unmittelbare Verständis der Betriebsweise dieser Brennkammer A wird auf die Einleitung der verdichteten Luft A1 aus dem Kompressor in die Brennkammer A, auf den Strömungsweg A2 dieser verdichteten Luft zu den Brennern B, auf die Brennstoffzuführung A3 zu den Brennern B, auf den den Brennern B nachgeschalteten Brennraum 22 der Brennkammer A sowie auf die Heissgase A4 zur Beaufschlagung einer Turbine hingewiesen.

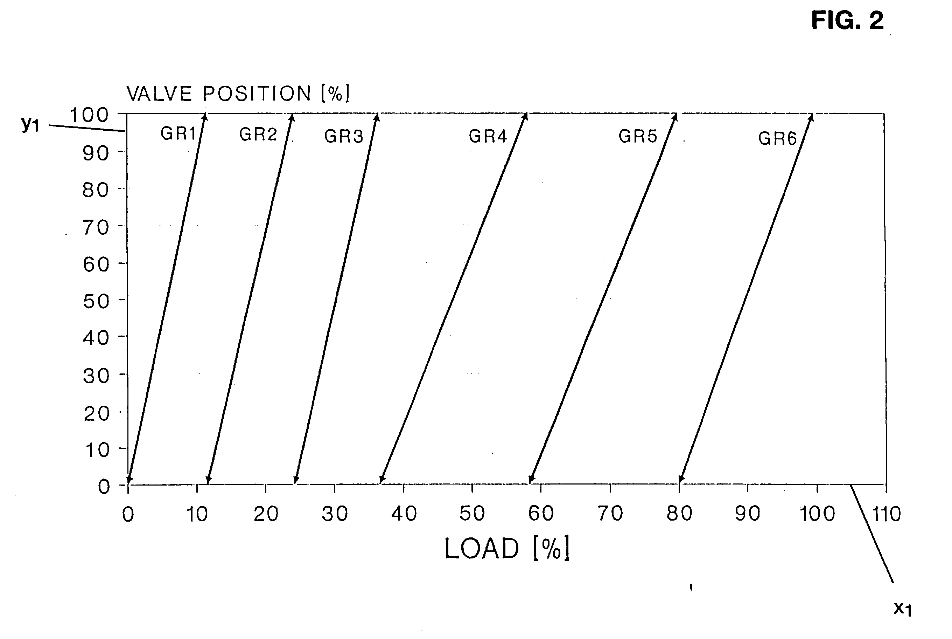

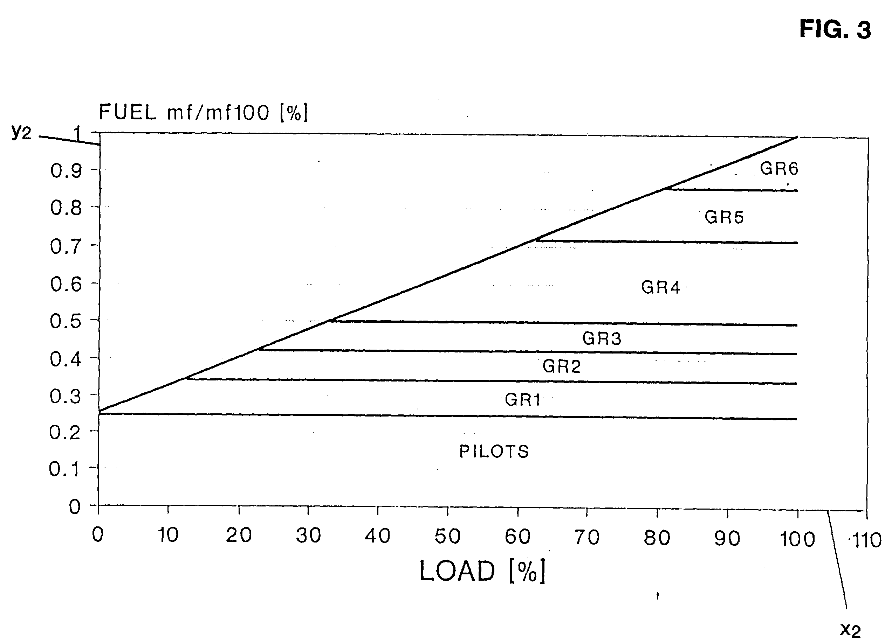

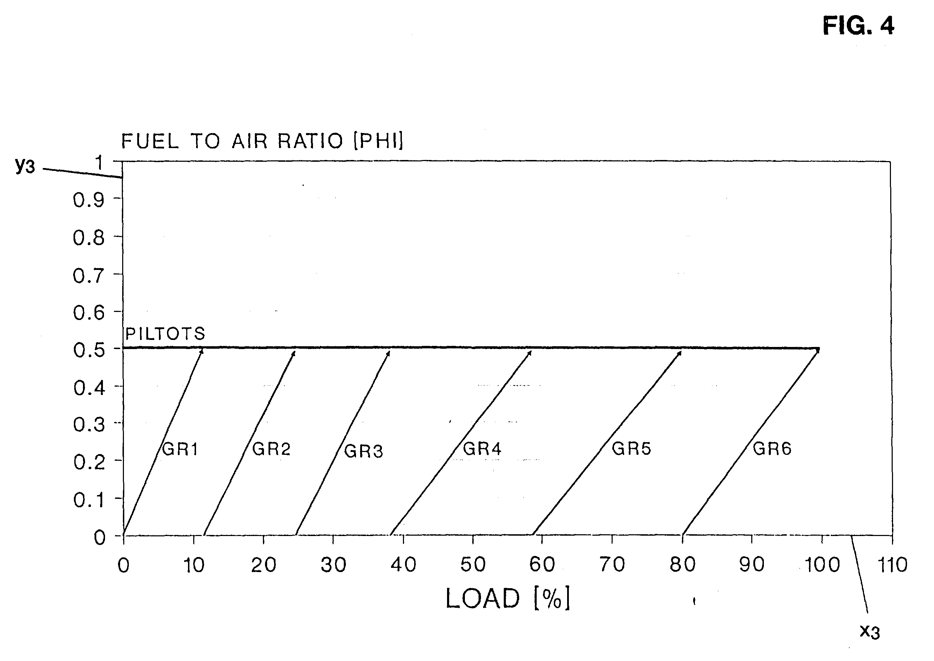

Die Fig. 2-4 zeigen einen pilotierten Betrieb mit einer Anzahl Brenner, welche innerhalb der Brennkammer A zu einer Anzahl Gruppen zusammengefasst sind. Dabei wird das Verhalten verschiedener Parameter in Abhängigkeit zur Last der Brennkammer dargestellt, wobei die Last auf die Abszissen X1, X2, X3 der verschiedenen erwähnten Figuren aufgetragen ist. Die verschiedenen Parameter sind die Ventilstellung, aufgetragen auf die Ordinate Y1 von Figur 2, die Brennstoffmenge, aufgetragen auf die Ordinate Y2 von Figur 3 und das Brennstoff/Luft-Verhältnis, aufgetragen auf die Ordinate Y3 von Fig. 4. Diese Figuren zeigen die Idee auf, wie bei einem pilotierten Betrieb von Brennern die NOx-Emissionen über die Last konstant gehalten werden, indem die Verbrennung bei der Grosszahl der Brenner B in der Brennkammer A konstant gehalten und eine kleine Anzahl von Brennern pilotiert betrieben wird. Diese Brenner fahren so mager, dass sie unterhalb ihrer Löschgrenze betrieben werden und so über keine eigene Reaktionszone verfügen. Die pilotierten Brenner nehmen alle Laständerungen auf. Bei diese Konfiguration sind an die Gruppenventile (Fig. 2) erhöhte Ansprüche zu stellen, da sie voll regelbar sein müssen. Der Brennstoff (Fig. 3) der pilotierten Brenner kann nur reagieren, wenn die Anordnung und die Drallrichtung der Nachbarbrenner, welche im Betrieb sind, zu einer guten Durchmischung des Brennstoff/Luft-Gemisches (Fig. 4) mit den Nachbarbrennern führen. Welche optimale Konstellation hier am Platze ist, richtet sich nach den jeweiligen Verhältnissen der Brennkammer und der Anzahl Brenner. Die Fig. 2-4 zeigen schematisch auf, wie ein 7-gruppiges Fahrprogramm bei einer Gesamtzahl von 34 Brennern aussieht:

| | |
|---|---|
| Gruppe Pilotbrenner GR0) | = 6 Brenner |
| Gruppe Hauptbrenner GR1, GR2 | = je 3 Brenner |
| Gruppe Hauptbrenner GR3 | = 4 Brenner |
| Gruppe Hauptbrenner GR4, GR5, GR6 | = je 6 Brenner |

Nebst dem beschriebenen Betriebskonzept der einzelnen Gruppen, wie es aus den Fig. 2-4 klar hervorgeht, hebt sich die Fahrweise der letzten Gruppe GR6 nochmals ab. Wie bereits oben beschrieben, liefert das Prinzip eines pilotierten Betriebes einzelner Brenner an sich eine Möglichkeit, die in der Beschreibungseinleitung herausgearbeiteten Nachteile, wie sie beim Stand der Technik vorherrschen, zu kompensieren. Zusätzlich werden nun die Brenner der Gruppe 6 GR6 in Abhängigkeit der Umgebungstemperatur mit Brennstoff versorgt. Diese Brenner werden grundsätzlich magerer als die Brenner der anderen Gruppen betrieben, weshalb sie logischerweise an der Produktion des thermischen NOx-Ausstosses nur unwesentlich beteiligt sind. Fällt beispielsweise die Aussentemperatur, so wird das Ventil der Gruppe 6 GR6 weiter geöffnet, was zu einer Umverteilung des Brennstoffes von den NOx-relevanten Brennern auf die Brenner der letztgenannten Gruppe 6 GR6 führt. Steigt hingegen die Aussentemperatur, so erfolgt die ungekehrte Prozedur. Die NOx-Bildung kann damit konstant gehalten werden. Dabei kann hier eine zusätzliche Massnahme eingreifen, welche dadurch charakterisiert ist, dass neben konstanten NOx-Emissionen bei Vollast auf auf konstantem Abstand zur Löschgrenze bei Vollast geregelt werden kann. Dies würde dann jeweils zu einer Minimierung der möglichen NOx-Emissionen führen.

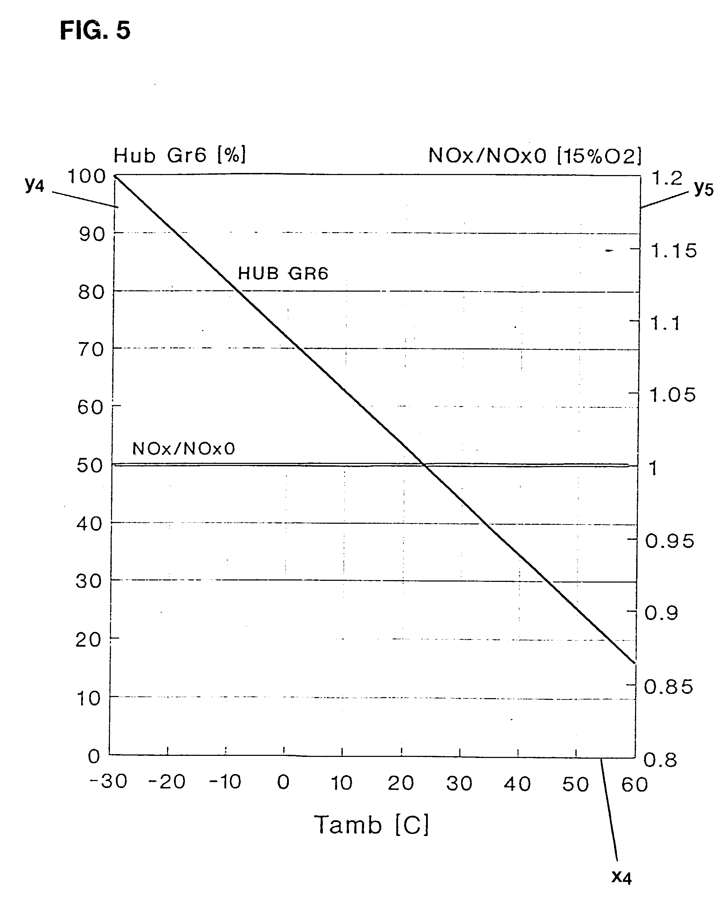

In diesem Zusammenhang wird auf die Fig. 5 verwiesen, in welcher die Korrektur des Ventilhubes der Gruppe 6 GR6, aufgetragen als Ordinate Y4 in Abhängigkeit der Aussentemperatur als Abszisse X4 bei Vollast, gezeigt wird, wobei die andere Ordinate Y5 den indexierten NOx-Ausstoss darstellt.

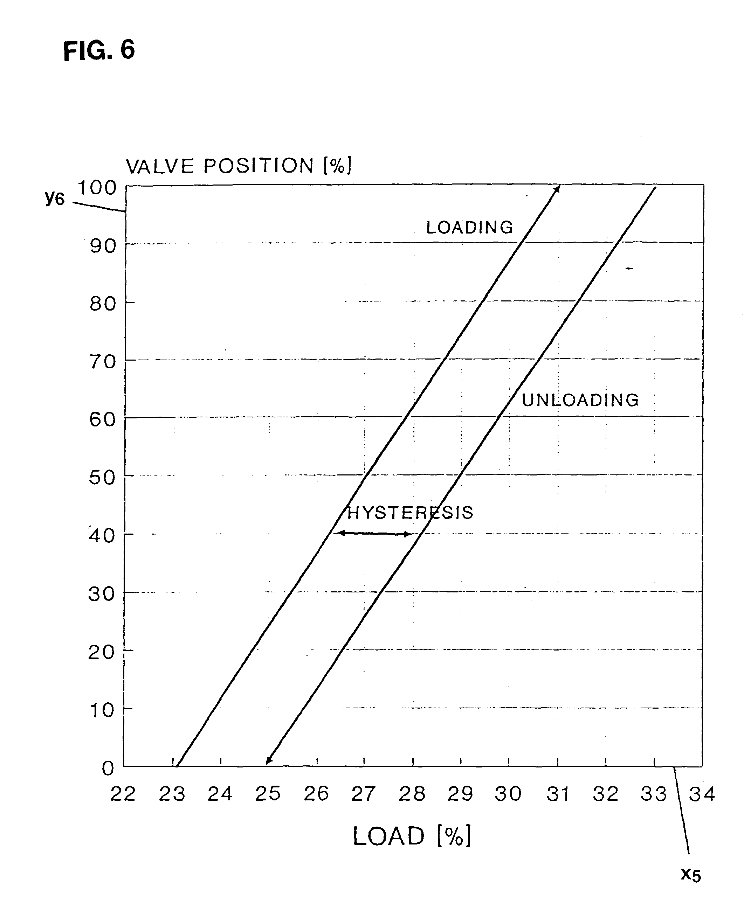

Zu Fig. 6 wird folgendes ausgeführt: Eine pilotierte Fahrweise lässt es, wie dargelegt, zu, die Brenner an der Löschgrenze zu betreiben. Wird im Laufe des Betriebes eine Gasturbine der Gasturbogruppe entlastet, so führt dies, verglichen mit dem stationären Betrieb, zu geringfügig verringerten Brennstoffmassenströmen pro Last. Dadurch steigt aber die Gefahr, dass die Löschgrenze aller Brenner überschritten wird. Abhilfe liefert nun die aus Fig. 6, mit der Ventilstellung als Ordinate Y6 in Abhängigkeit zur Last als Abszisse X5, schaltungstechnisch implementierte Hysterese Z, welche aufzeigt, dass die Brenner beim Abfahren der Anlage grundsätzlich leicht fetter betrieben werden.

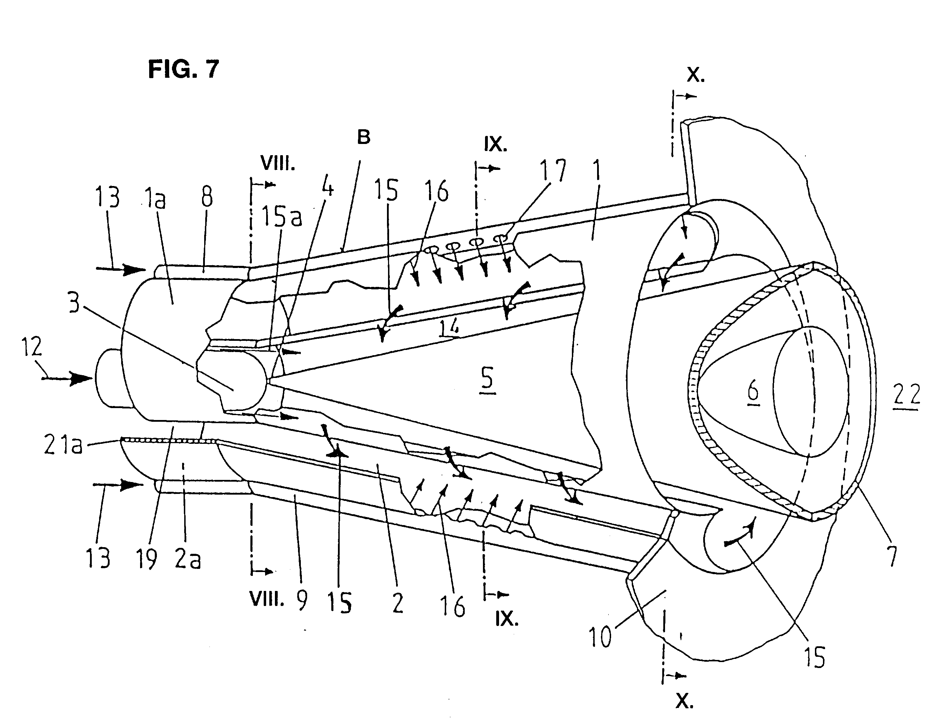

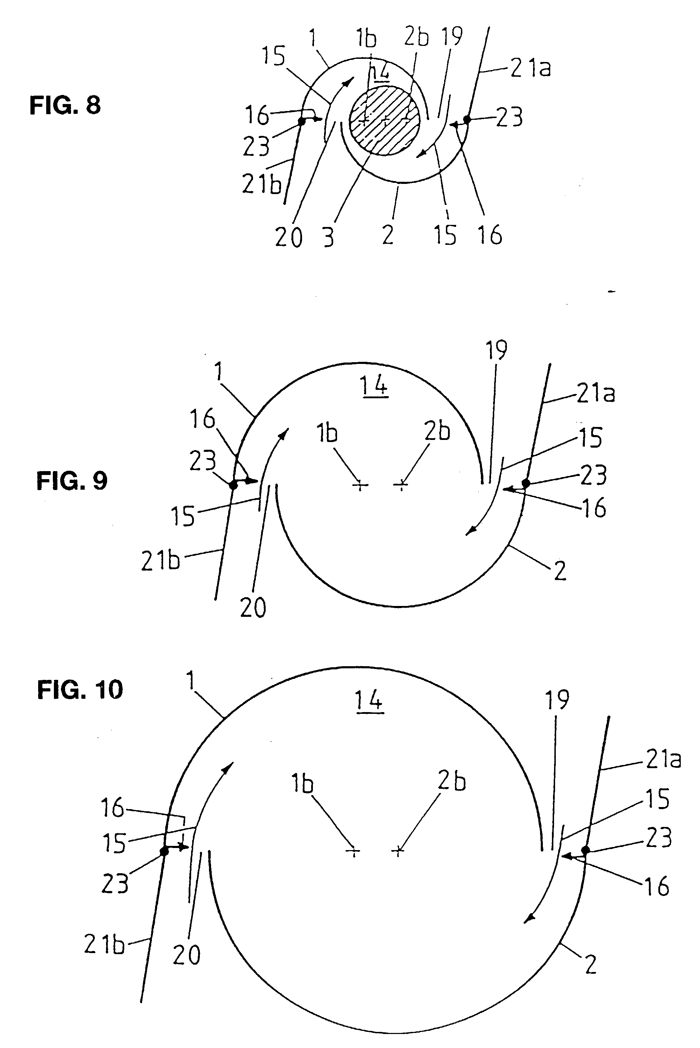

Fig. 7-10 zeigen einen für den pilotierten Betrieb eingesetzten Brenner B, der, allenfalls grössenspezifisch, Pilotbrenner als auch Hauptbrenner sein kann. Um den Aufbau dieses Brenners B besser zu verstehen, ist es vom Vorteil, wenn gleichzeitig zu Fig. 7 die einzelnen darin ersichtlichen Schnitte nach den Figuren 8-10 herangezogen werden. Des weiteren, um Fig. 7 nicht unnötig unübersichtlch zu gestalten, sind in ihr die nach Fig. 8-10 schematisch gezeigten Leitbleche 21a, 21b nur andeutungsweise aufgenommen worden. Im folgenden werden bei der Beschreibung von Fig. 3 nach Bedarf auf die anderen Figuren 8-10 verwiesen. Der Brenner B gemäss Fig. 7 besteht aus zwei halben hohlen kegeligen Körpern 1, 2, die bezüglich ihrer Mittelachse 1b, 2b (Fg. 8-10) radial versetzt zueinander aufeinder liegen. Die Versetzung der jeweiligen Mittelachse 1b, 2b zueinander schafft auf beiden Seiten der Körper 1, 2 in entgegengesetzter Einströmungsanordnung jeweils einen tangentialen Lufteintrittsschlitz 19, 20 frei (Vgl. hierzu die Fig. 8-10), durch welche die Verbrennungsluft 15, die beispielsweise aus Frischluft und rückgeführtem Abgas besteht, in den Innenraum des Brenners B, d.h., in den von beiden Körpern 1, 2 gebildeten Kegelhohlraum 14 strömt. Die Kegelform der gezeigten Körper 1, 2 in Strömunghsrichtung weist einen bestimmten festen Winkel auf. Selbstverständlich können die Körper 1, 2 in Strömungsrichtung eine progressive oder degressive Kegelneigung aufweisen. Die letztgenannten Ausführungsformen sind zeichnerisch nicht erfasst, da sie ohne weiteres nachempfindbar sind. Welche Form schlussendlich den Vorzug gegeben wird, hängt im wesentlichen davon ab, welche Parameter die jeweilige Verbrennung aufweist. Die beiden Körper 1, 2 haben je einen zylindrischen Anfangsteil 1a, 2a, die eine natürliche Fortsetzung der kegeligen Form bilden, sonach ebenfalls tangentiale Eintrittschlitze aufweisen. Im Bereich dieses zylindrischen Anfangsteils 1a, 2a ist beim Betrieb des Vormischbrenners B mit einem flüssigen Brennstoff 12 eine Düse 3 untergebracht, deren Brennstoffeindüsung 4 in etwa mit dem engsten Querschnitt des durch die Körper 1, 2 gebildeten Kegelhohlraumes 14 zusammenfällt. Die Brennstoffleistung dieser Düse 3 richtet sich nach der Leistung und Grösse des Brenners. Selbstverständlich kann auf die zylindrischen Anfangsteile 1a, 2a verzichtet werden. Beide Körper 1, 2 weisen beim Betrieb des Vormischbrenners B mit einem gasförmigen Brennstoffes 13 je eine Brennstoffleitung 8, 9 auf, welche in Strömungsrichtung entlang der Länge des Brenners B eine Anzahl regelmässig verteilte Oeffnungen 17 aufweist, welche vorzugsweise als Düsen ausgebildet sind. Durch diese Oeffnungen 17 wird demnach ein gasförmiger Brennstoff 13 herangeführt, welcher der durch die tangentialen Eintrittsschlitze 19, 20 in den Kegelhohlraum 14 einströmenden Verbrennungsluft 15 zugemischt wird 16. Diese Brennstoffleitungen 8, 9 sind vorzugsweise am Ende der tangentialen Einströmung, unmittelbar vor Eintritt in den Kegelhohlraum 14 plaziert, dies um eine optimale geschwindigkeitsbedingte Zumischung 16 zwischen Brennstoff 13 und einströmender Verbrennungsluft zu erzielen. Selbstverständlich ist auch über diese Oeffnungen 17 ein Mischbetrieb mit verschiedenen Brennstoffen möglich. Grundsätzlich wird der Brenner B nur mit jenen Brennstoffzuführenden Mitteln versehen, die für den jeweiligen Brennstoff vorgesehen sind. Brennraumseitig 22 geht die Ausgangsöffnung des Brenners B in eine Frontwand 10 über, in welcher allenfalls in der Zeichnung nicht dargestellte Bohrungen vorgesehen sind, durch welche bei Bedarf Verdünnungsluft, Kühluft und/oder Verbrennungsluft strömt, und so den Flammenbereich vorteilhaft beeinflusst. Der aus die Düse 3 strömende flüssige Brennstoff 12 wird in einem spitzen Winkel in den Kegelhohlraum 14 eingedüst, dergestalt, dass sich in der Brenneraustrittsebene ein möglichst homogenes kegeliges Spray bildet, was nur möglich ist, wenn die Innenwände der Körper 1, 2 durch diesen Brennstoff nicht benetzt werden. Bei dieser Düse 3 handelt es sich vorzugsweise um eine luftunterstützte Düse oder um eine Düse mit Druckzerstäubung. Das kegelige Brennstoffspray 5 aus der Düse 3 wird von der tangential einströmenden Verbrennungsluft 15 und, nach Bedarf, von einem weiteren axsial herangeführten Verbrennungsluftstrom 15a umschlossen. In axialer Richtung wird die Konzentration des flüssigen Brennstoffes 12 fortlaufend durch die über die tangentialen Eintrittsschlitze 19, 20 einströmende Verbrennungsluft 15 abgebaut. Wird gasförmiger Brennstoff 13 über die Brennstoffleitungen 8, 9 eingedüst, so geschieht die Gemischbildung mit der Verbrennungsluft, wie oben bereits beschrieben, direkt im Bereich der tangentialen Eintrittsschlitze 19, 20. Im Zusammenhang mit der Eindüsung des flüssigen Brennstoffes 12 wird im Bereich des Wirbelaufplatzens, also im Bereich der sich am Ausgang des Brenners B bildenden Rückströmzone 6, die optimale homogene Brennstoffkonzentration über den Querschnitt erreicht. Die Zündung erfolgt an der Spitze der Rückströmzone 6. Erst an dieser Stelle kann eine stabile Flammenfront 7 entstehen. Ein Rückschlag der Flamme ins Innere des Brenners B, wie dies bei bekannten Vormischstrecken potentiell immer der Fall ist, wogegen dort mit komplizierten Flammenhaltern Abhilfe gesucht wird, ist hier nicht zu befürchten. Ist die Verbrennungsluft vorgewärmt, was bei einer Gemischbildung mit rückgeführtem Abgas stets der Fall ist, so stellt sich eine beschleunigte ganzheitliche Verdampfung des flüssigen Brennstoffes 12 ein, bevor der Zündungsort am Ausgang des Brenners B erreicht ist. Der Grad der Verdampfung des Brennstoffes ist selbstverständlich von der Grösse des Brenners B, von der Tropfengrösse des eingedüsten Brennstoffes sowie von der Temperatur der Verbrennungsluftströme abhängig. Minimierte Schadstoff-Emissionswerte sind zu erreichen, wenn sich eine vollständige Verdampfung des Brennstoffes vor Eintritt des Gemisches in die Verbrennungszone einstellt. Gleiches gilt, wenn im nahstöchiometrischen Betrieb die Ueberschussluft durch ein rezirkuliertes Abgas ersetzt wird. Die Breite der tangentialen Eintrittsschlitze 19, 20 hat einen Einfluss auf das gewünschte Strömungsfeld der Luft mit ihrer Rückströmzone 6 im Bereich der Brennermündung. Allgemein kann gesagt werden, dass eine Verkleinerung der Breite der tangentialen Eintrittsschlitze 19, 20 die Rückströmzone 6 weiter stromaufwärts verschiebt, wodurch dann das Gemisch logischerweise früher zur Zündung kommt. Immerhin ist zu sagen, dass die einmal fixierte Rückströmzone 6 an sich positionsstabil ist, denn die Drallzahl nimmt in Strömungsrichtung im Bereich der Kegelform des Brenners B zu. Die Achsialgeschwindigkeit des Gemisches lässt sich sodann durch entsprechende physikalische Eigenschaften der axial herangeführten Verbrennungsluft 15a beeinflussen. Wie aus Fig. 8-10 gut hervorgeht, lässt sich die Breite der tangentialen Eintrittsschlitze 19, 20 durch eine entsprechende mechanische, nach einer lösbaren Verbindung aufgebaute Einrichtung, die zwischen den beiden Körpern 1, 2 wirkt, erstellen. Mit einer solchen in der Figur nicht gezeigte Massnahme lässt sich eine Anpassung auch während des Betriebes vornehmen.

Aus den Fig. 8-10 geht die eigentliche geometrische Konfiguration der Leitbleche 21a, 21b hervor. Sie haben Strömungseinleitungsfunktionen, wobei sie, entsprechend ihrer Länge, das jeweilige Ende der Körper 1, 2 in Anströmungsrichtung der Verbrennungsluft 15 verlängern. Die Kanalisierung der Verbrennungsluft 15 in den Kegelhohlraum 14 kann durch Oeffnen bzw. Schliessen der Leitbleche 21a, 21b um einen im Bereich des tangentialen Eintrittsschlitze 19, 20 plazierten Drehpunkt 23 optimiert werden, insbesondere ist dies vonnöten, wenn die ursprüngliche Breite der tangentialen Eintrittsschlitze 19, 20 nach obigen Ueberlegungen verändert wird. Selbstverständlich kann der Brenner B auch ohne Leitbleche 21a, 21b betrieben werden, oder es können hierfür andere ähnliche Hilfsmittel vorgesehen werden.

### Bezeichnungsliste

- A: Brennkammer
- A1: Verdichtete Luft
- A2: Strömungsweg der verdichteten Luft
- A3: Brennstoffzuführung
- A4: Heissgase zur Turbine
- B: Brenner
- 1, 2: Kegelige Körper
- 1a, 2a: Zylindrische Anfangsteile
- 1b, 2b: Mittelachsen der Körper 1, 2
- 3: Brennstoffdüse
- 4: Brennstoffeindüsung
- 5: Brennstoffspray
- 6: Rückströmzone (Vortex Breakdown)
- 7: Flammenfront
- 8, 9: Brennstoffleitungen
- 10: Frontwand
- 12: Flüssiger Brennstoff
- 13: Gasförmiger Brennstoff
- 14: Kegelhohlraum
- 15, 15a: Verbrennungsluftströme
- 16: Eindüsung des Brennstoffes von den Leitungen 8, 9
- 17: Düsen, Oeffnungen
- 19, 20: Tangentiale Eintrittsschlitze
- 21a: Leitblech
- 21b: Leitblech
- 22: Brennraum
- 23: Drehpunkt
- X1-X5: Abszissen
- Y1-Y6: Ordinaten
- Z: Hysterese

## Patentansprüche

1. Verfahren zum Betrieb einer Brennkamme (A) einer Gasturbine, wobei die Brennkammer (A) mit einer Anzahl von Vormischbrennern (B) bestückt ist, welche in Gruppen unterteilt angeordnet sind, wobei mindestens eine Gruppe mit regelbaren Vormischbrennern (B) ausgerüstet ist, dadurch gekennzeichnet, dass bei Teillast jeweils die letztzugeschaltete Brennergruppe nach den Umgebungsbedingungen und der Last geregelt wird, und dass bei Vollast jeweils die letztzugeschaltete Brennergruppe (GR6) nach den Umgebungsbedingungengen geregelt wird.

2. Verfahren nach Anspruch 1, dadurch gekennzeichnet, dass die Umgebungsbedingungen, nach welchen geregelt wird, die Umgebungstemperatur und/oder der Umgebungsdruck sind.

3. Verfahren nach Anspruch 1, dadurch gekennzeichnet dass bei Abfahren der Gasturbine die Vormischbrenner (B) fetterer als beim Hochfahren betrieben werden.

4. Verfahren nach Anspruch 1, dadurch gekennzeichnet, dass als Brennkammer eine mit einem einheitlichen Brennraum (22) stromab der Brennergruppen aufgebaute Silobrennkammer (A) betrieben wird.

5. Verfahren nach Anspruch 1, dadurch gekennzeichnet, dass ein Verbrennungsluftstrom (15) über strömungsmässig entgegengesetzte, tangentiale Eintrittsschlitze (19, 20), die aus mindestens zwei in Strömungsrichtung aufeinander positionierten, hohlen kegeligen Körpern (1, 2) mit zueinander versetzt verlaufenden Mittelachsen (1b, 2b) gebildet werden, in den Vormischbrenner (B) strömt, und dass ein Brennstoff(12, 13) über mindestens eine Brennstoffdüse (3, 17) in den Verbrennungsluftstrom (15) eingedüst wird.

6. Verfahren nach Anspruch 5, dadurch gekennzeichnet, dass ein flüssiger Brennstoff (12) über eine mittig der zueinander versetzt verlaufenden Mittelachsen (1b, 2b) wirkende Düse (3) in den Verbrennungsluftstrom (15) eingedüst wird.

7. Verfahren nach Anspruch 5, dadurch gekennzeichnet, dass ein gasförmiger Brennstoff (13) über mindestens eine im Bereich der tangentialen Eintrittsschlitze (19, 20) wirkende Düse (17) in den Verbrennungsluftstrom (15) eingedüst wird.

8. Verfahren nach Anspruch 5, dadurch gekennzeichnet, dass ein weiterer Verbrennungsluftstrom (15a) axial in von den kegeligen Körpern (1, 2) gebildeten Kegelhohlraum (14) einströmt.

9. Verfahren nach Anspruch 5, dadurch gekennzeichnet, dass die kegeligen Körper (1, 2) dergestalt ausgebildet sind, dass im Innern des Vormischbrenners (B) eine Strömung nach einem gleichförmig zunehmend, degressiven oder progressiven Durchflussquerschnitt gebildet wird.

## Claims

1. Method for operating a combustion chamber (A) of a gas turbine, the combustion chamber (A) being equipped with a number of premixing burners (B) which are arranged so as to be subdivided into groups, at least one group being equipped with controllable premixing burners (B), characterized in that, at part load, the last burner group to be switched on in each case is controlled in accordance with the ambient conditions and the load and in that, at full load, the last burner group to be switched on in each case is controlled in accordance with the ambient conditions.

2. Method according to Claim 1, characterized in that the ambient conditions in accordance with which the control is carried out are the ambient temperature and/or the ambient pressure.

3. Method according to Claim 1, characterized in that the premixing burners (B) are operated with a richer mixture when the gas turbine is being run down than they are when it is being run up.

4. Method according to Claim 1, characterized in that a silo combustion chamber (A) constructed with a unitary combustion space (22) downstream of the burner groups is operated as the combustion chamber.

5. Method according to Claim 1, characterized in that a combustion airflow (15) flows into the premixing burner (B) via tangential inlet slots (19, 20) which are opposed to one another in terms of flow and are formed by at least two hollow conical bodies (1, 2) which are positioned one on top of the other in the direction of flow and have centre lines (1b, 2b) which are offset relative to one another, and in that a fuel (12, 13) is injected into the combustion airflow (15) via at least one fuel nozzle (3, 17).

6. Method according to Claim 5, characterized in that a liquid fuel (12) is injected into the combustion airflow (15) via a nozzle (3) acting centrally between the centre lines (1b, 2b), which are offset relative to one another.

7. Method according to Claim 5, characterized in that a gaseous fuel (13) is injected into the combustion airflow (15) via at least one nozzle (17) acting in the region of the tangential inlet slots (19, 20).

8. Method according to Claim 5, characterized in that a further combustion airflow (15a) flows axially into hollow conical space (14) formed by the conical bodies (1, 2).

9. Method according to Claim 5, characterized in that the conical bodies (1, 2) are designed in such a way that a flow with a uniformly increasing, degressive or progressive cross-section of throughflow is formed in the interior of the premixing burner (B).

## Revendications

1. Procédé de fonctionnement d'une chambre de combustion (A) d'une turbine à gaz, dans lequel une chambre de combustion (A) est garnie d'un certain nombre de brûleurs à prémélange (B), qui sont disposés dans une répartition en groupes, dans lequel au moins un groupe est équipé de brûleurs à prémélange (B) pouvant être régulés, caractérisé en ce qu'à charge partielle, le dernier groupe de brûleurs mis en service est régulé en fonction des conditions ambiantes et de la charge, et en ce qu'à pleine charge, le dernier groupe de brûleurs mis en service (GR6) est régulé en-fonction des conditions ambiantes.

2. Procédé suivant la revendication 1, caractérisé en ce que les conditions ambiantes, en fonction desquelles on effectue la régulation, sont la température ambiante et/ou la pression ambiante.

3. Procédé suivant la revendication 1, caractérisé en ce que les brûleurs à prémélange (B) fonctionnent en régime plus riche lors de la mise à l'arrêt de la turbine que lors de sa mise en marche.

4. Procédé suivant la revendication 1, caractérisé en ce que l'on fait fonctionner comme chambre de combustion, une chambre de combustion en silo (A) montée avec une zone de combustion unitaire (22) en aval des groupes de brûleurs.

5. Procédé suivant la revendication 1, caractérisé en ce qu'un courant d'air de combustion (15) pénètre dans le brûleur à prémélange (B) par des fentes d'entrée tangentielles (19, 20), ayant des sens d'écoulement opposés, qui sont formées par au moins deux corps coniques creux (1, 2) positionnés l'un au-dessus de l'autre dans la direction d'écoulement avec des axes centraux (1b, 2b) décalés l'un par rapport à l'autre, et en ce qu'un combustible (12, 13) est injecté par au moins un gicleur à combustible (3, 17) dans le courant d'air de combustion (15).

6. Procédé suivant la revendication 5, caractérisé en ce qu'un combustible liquide (12) est injecté dans le courant d'air de combustion (15) par un gicleur (3) opérant au milieu des axes centraux (1b, 2b) décalés l'un par rapport à l'autre.

7. Procédé suivant la revendication 5, caractérisé en ce qu'un combustible gazeux (13) est injecté dans le courant d'air de combustion (15) par au moins un gicleur (17) opérant dans la région des fentes d'entrée tangentielles (19, 20).

8. Procédé suivant la revendication 5, caractérisé en ce qu'un autre courant d'air de combustion (15a) pénètre axialement dans l'espace conique creux (14) formé par les corps coniques (1, 2).

9. Procédé suivant la revendication 5, caractérisé en ce que les corps coniques (1, 2) sont configurés de telle façon qu'à l'intérieur du brûleur à prémélange (B), il se forme un écoulement suivant une section de passage uniformément croissante, dégressive ou progressive.
